# EUROPÄISCHE PATENTSCHRIFT

(11) **EP 3 312 635 B1**
(45) Veröffentlichungstag und Bekanntmachung des Hinweises auf die Patenterteilung: **27.02.2019**
(21) Anmeldenummer: 16194453.3
(22) Anmeldetag: 18.10.2016
(51) Int. Cl.: G01T 1/175, H02M 3/337, H02M 7/10

(54) **RADIOMETRISCHES MESSGERÄT FÜR ZWEI-LEITERBETRIEB MIT MODIFIZIERTEM SPANNUNGSWANDLER**
RADIOMETRIC GAUGE FOR TWO LINE OPERATION WITH MODIFIED VOLTAGE CONVERTER
APPAREIL DE MESURE RADIOMÉTRIQUE POUR FONCTIONNEMENT EN DEUX FILS COMPRENANT UN CONVERTISSEUR DE TENSION MODIFIÉ

(43) Veröffentlichungstag der Anmeldung: 25.04.2018
(73) Patentinhaber: VEGA Grieshaber KG, 77709 Wolfach (DE)
(72) Erfinder: KÖRNLE, Ralf, 77736 Zell a. H. (DE)
(74) Vertreter: Maiwald Patent- und Rechtsanwaltsgesellschaft mbH

(56) Entgegenhaltungen:
- EP-A1- 0 056 142

## Beschreibung

### Gebiet der Erfindung

Die Erfindung betrifft die radiometrische Füllstandmessung, die radiometrische Dichtemessung, die radiometrische Grenzstandmessung und die radiometrische Durchsatzmessung. Insbesondere betrifft die Erfindung ein radiometrisches Messgerät mit einem modifizierten Spannungswandler sowie ein Verfahren zum Messen eines Füllstands, eines Grenzstands, einer Dichte oder eines Durchsatzes mit einem radiometrischen Messgerät.

### Hintergrund

Bei der radiometrischen Füllstand-, Grenzstand-, Dichte- oder Durchsatzmessung werden die von einem radioaktiven Strahler ausgesendeten und durch das Füllgut gelangenden radioaktiven Strahlen detektiert und in elektrische Pulse umgewandelt. Zur Detektion der radioaktiven Strahlung kann ein Szintillator vorgesehen sein, der daraus Lichtpulse erzeugt, die von einem nachgeschalteten Detektor, beispielsweise ein Photomultiplier (PMT), eine Avalanche-Photodiode (APT) oder ein Silizium-Photomultiplier (SiPM), in elektrische Pulse umgewandelt werden. Alternativ kann ein Geiger-Müller-Zählrohr vorgesehen sein. Diese Signale werden dann von einer Auswerteschaltung ausgewertet, um den Füllstand, den Grenzstand, die Dichte oder den Durchsatz zu bestimmen.

Diese Messgeräte weisen einen signifikanten Energiebedarf auf.
EP 0 056 142 A1 beschreibt ein Strahlenmessgerät mit einem Gegentakt-Sinuswandler, der periodisch ein- und ausgeschaltet wird.

### Zusammenfassung der Erfindung

Es ist eine Aufgabe der Erfindung, den Energiebedarf eines radiometrischen Messgeräts auf Szintillationsbasis mit Photomultiplier (PMT) bzw. auf Basis eines Geiger-Müller-Zählrohrs zu verringern.

Diese Aufgabe wird durch die Gegenstände der unabhängigen Patentansprüche gelöst. Weiterbildungen der Erfindung ergeben sich aus den Unteransprüchen und der folgenden Beschreibung.

Ein erster Aspekt der Erfindung betrifft ein radiometrisches Messgerät, welches eine Detektoranordnung, eine Spannungsversorgung und einen Spannungswandler zur Erzeugung einer für den Betrieb eines Photomultipliers bzw. Geiger-Müller-Zählrohrs benötigten Hochspannung aufweist. Bei dieser Hochspannung handelt es sich um eine Gleichspannung.

Die Detektoranordnung dient dem Umwandeln von radioaktiver Strahlung in ein elektrisches Signal und weist beispielsweise einen Szintillator und einen Photomultiplier oder ein Geiger-Müller-Zählrohr auf.

Die Spannungsversorgung dient der Bereitstellung einer konstanten Versorgungsspannung, welche dem Spannungswandler zugeführt wird. Der Spannungswandler weist eine Gegentaktsteuerungsschaltung und einen Transformator auf.

Die Gegentaktsteuerungsschaltung dient der Erzeugung eines pulsierenden Wechselspannungssignals aus der konstanten Versorgungsspannung, das ein Tastverhältnis von weniger als 1 % aufweist und welches dem Transformator zugeführt wird, um daraus die Versorgungsspannung für die Detektoranordnung zu erzeugen. Bei dieser Versorgungsspannung handelt es sich um eine Hochspannung, die bei Verwendung eines Photomultipliers PMT mehrere 100V, beispielsweise 900V, beträgt.

Als Tastverhältnis des Wechselspannungssignals bezeichnet man das Verhältnis aus Pulsbreite und Periodendauer.

Gemäß einer Ausführungsform der Erfindung ist das Tastverhältnis kleiner als 0,1 %. Dies bedeutet, dass der Transformator nur während weniger als 1/1000 der Zeit angesteuert wird und auch nur während dieser Zeit ein Stromfluß stattfindet.

Gemäß einer Ausführungsform der Erfindung beträgt die Frequenz f des pulsierenden Wechselspannungssignals maximal 500 Hz, beispielsweise sogar weniger als 300 Hz oder 100 Hz. Die Pulsbreite liegt somit in diesem Fall bei beispielsweise 20 µs (f = 500 Hz; Tastverhältnis = 1 %).

Die Pulsbreiten können aber auch deutlich geringer sein, beispielsweise in der Größenordnung von 5 µs oder weniger.

Gemäß einer Ausfuhrungsform der Erfindung weist der Transformator ein Übersetzungsverhältnis von 25:400 oder anderen Werten, beispielsweise 25:800 oder 10:400 auf.

Gemäß einer weiteren Ausführungsform der Erfindung weist die konstante Versorgungsspannung einen Wert von 4 V oder weniger auf, beispielsweise 2,7 V.

Der Spannungswandler kann einen oder mehrere Kondensatoren aufweisen, die zur Vervielfachung und Glättung des Ausgangssignals des Transformators ausgeführt sind. Alternativ oder zusätzlich kann der Spannungswandler einen oder mehrere Pufferkondensatoren aufweisen, die zum Zwischenspeichern der vom Transformator ausgegebenen elektrischen Ladung ausgeführt sind, um einen kontinuierlichen Betrieb der Detektoranordnung zu ermöglichen.

Gemäß einer weiteren Ausführungsform der Erfindung ist das radiometrische Messgerät zum Anschluss an eine 4-20 mA Zweileiterschleife ausgeführt, über welche das Messgerät mit der zu seinem Betrieb erforderlichen elektrischen Energie versorgt wird. Über die Zweileiterschleife kann auch die Datenkommunikation mit einem externen Gerät erfolgen.

Ein weiterer Aspekt der Erfindung betrifft ein Verfahren zum Messen eines Füllstands, eines Grenzstands, einer Dichte oder eines Durchsatzes mit einem radiometrischen Messgerät, bei dem eine konstante Versorgungsspannung bereitgestellt wird und aus dieser ein pulsierendes Wechselspannungssignal mit einem Tastverhältnis von kleiner 1 % erzeugt wird. Das pulsierende Wechselspannungssignal wird daraufhin in ein Hochspannungssignal gewandelt, das für die Energieversorgung einer Detektoranordnung eingesetzt wird, mit deren Hilfe radioaktive Strahlung in ein elektrisches Signal umgewandelt wird, um daraus einen Füllstand, eine Dichte, einen Grenzstand oder einen Durchsatz zu bestimmen.

Im Folgenden werden Ausführungsbeispiele der Erfindung unter Bezugnahme auf die Figuren beschrieben.

### Kurze Beschreibung der Figuren

Fig. 1 zeigt ein Prinzipschaltbild eines radiometrischen Messgeräts gemäß einem Ausführungsbeispiel der Erfindung.
Fig. 2A zeigt ein pulsierendes Wechselspannungssignal für einen Transformator eines Spannungswandlers.
Fig. 2B zeigt ein pulsierendes Wechselspannungssignal für einen Transformator eines Spannungswandlers gemäß dem Stand der Technik.
Fig. 2C zeigt ein pulsierendes Wechselspannungssignal für einen Transformator eines Gleichstrom-Wechselstromwandlers gemäß einem weiteren
   Beispiel.
Fig. 2D zeigt ein pulsierendes Wechselspannungssignal für einen Transformator eines Spannungswandlers gemäß einem Ausführungsbeispiel der Erfindung.
Fig. 3 zeigt einen Spannungswandler in Kombination mit einer Spannungsversorgung und einer Detektoranordnung gemäß einem Ausführungsbeispiel der Erfindung.
Fig. 4 zeigt ein Prinzipschaltbild eines radiometrischen Messgeräts gemäß einem weiteren Ausführungsbeispiel der Erfindung.
Fig. 5 zeigt ein Flussdiagramm eines Verfahrens gemäß einem Ausführungsbeispiel der Erfindung.

### Detaillierte Beschreibung von Ausführungsbeispielen

Die Darstellungen in den Figuren sind schematisch und nicht maßstäblich. Werden in verschiedenen Figuren die gleichen Bezugszeichen verwendet, so bezeichnen diese gleiche oder ähnliche Elemente.

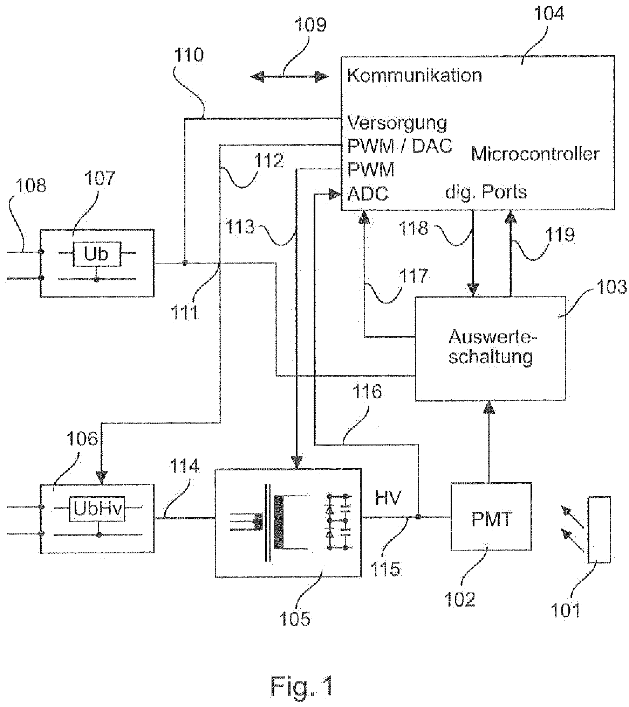

Fig. 1 zeigt ein Prinzipschaltbild eines radiometrischen Messgeräts gemäß einem Ausführungsbeispiel der Erfindung. Die von einer radioaktiven Quelle (nicht gezeigt in Fig. 1) ausgesendete radioaktive Strahlung durchläuft beispielsweise einen Füllgutbehälter und trifft dann auf den Szintillator 101 auf. Der Szintillator erzeugt aus der radioaktiven Strahlung Lichtblitze, die von dem Lichtdetektor 102 in ein elektrisches Signal umgewandelt werden. Alternativ zum Szintillator 101 und dem Lichtdetektor 102 kann auch ein Geiger-Müller-Zählrohr vorgesehen sein.

Bei dem Lichtdetektor handelt es sich beispielsweise um einen oder mehrere Photomultiplier, einen oder mehrere Silizium-Photomultiplier oder eine oder mehrere Photodioden.

Das vom Lichtdetektor 102 erzeugte elektrische Signal wird an die Auswerteschaltung 103 weitergeleitet. Die Auswerteschaltung 103 wertet das elektrische Signal aus und leitet ihr Auswerteergebnis an den Mikroprozessor 104, der dann daraus den Füllstand, den Grenzstand, die Dichte oder den Durchsatz berechnet und über die Zweileiterschleife 108 an ein externes Auswertegerät (nicht dargestellt) weiterleiten kann.

Das Messgerät erhält die für seinen Betrieb erforderliche Energie über die Zweileiterschleife 108, welche an die Eingangsschaltung 107 angeschlossen ist. Die Eingangssschaltung 107 stellt eine geeignete Versorgungsspannung für den Mikroprozessor 104 und die Auswerteschaltung 103, sowie für eine Spannungsversorgung 106 zur Versorgung des Lichtdetektors bereit. Die Eingangsschaltung 107 bildet somit die Schnittstelle zwischen der Zweidrahtleitung 108 und der angeschlossenen Schaltung.

Der Mikroprozessor 104 kann eine Kommunikationsschnittstelle 109 zur Übermittlung der Messwerte aufweisen, die beispielsweise an die Zweidrahtleitung 108, eine andere, drahtgebundene Kommunikationsleitung oder ein drahtloses Kommunikationsgerät angeschlossen ist. Darüber hinaus weist der Mikroprozessor 104 eine Versorgungsschnittstelle 110 zum Anschluss an die Eingangsschaltung 107 und eine Leitung zur Ausgabe eines Steuersignals 112 für die Spannungsversorgung 106 und eine Steuerschnittstelle 113 zur Steuerung des Spannungswandlers 105 auf. Des Weiteren ist ein Signaleingang 116 mit einem Analog/Digitalwandler zur Entgegennahme eines Signals von der Hochspannungsleitung 115, die zwischen dem Spannungswandler 105 und dem Lichtdetektor 102 angeordnet ist, vorgesehen. Über die Leitung 115 wir der Lichtdetektor 102 mit der Hochspannung des Spannungswandlers 105 versorgt.

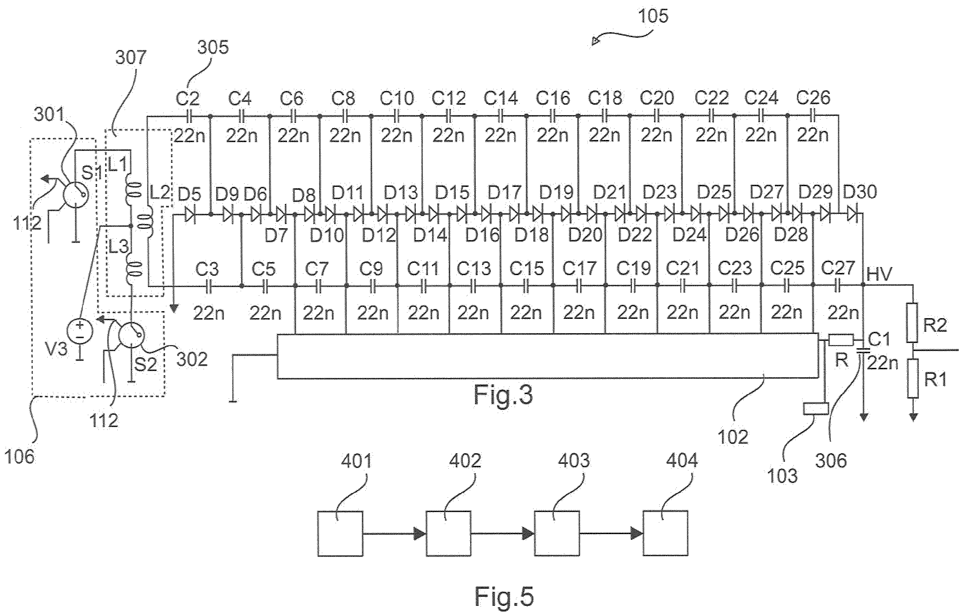

Die Spannungsversorgung 106 erhält ihre Energie aus der Spannungsversorgung 107 und wird vom Mikroprozessor 104 gesteuert. Alternativ oder zusätzlich wird auch der Spannungswandler 105 vom Mikroprozessor gesteuert, um aus dem von der Spannungsversorgung 106 abgegebenen Gleichspannungssignal 114 ein pulsierendes Wechselspannungssignal zu erzeugen. Dieses Wechselspannungssignal wird über entsprechende Dioden und Kondensatoren gleichgerichtet und geglättet und dann als Hochspannungssignal dem Lichtdetektor 102 über die Leitung 115 bereitgestellt (vgl. Fig.3).

Die Auswerteschaltung 103 teilt dem Mikroprozessor 104 über eine digitale Schnittstelle 119 das Auswerteergebnis (Messergebnis) mit und empfängt von diesem über die digitale Schnittstelle 118 Befehle. Die Leitung 117 führt zum ADC des Controllers 104 und ist für die Messung der Pulsamplitude vorgesehen.

Es hat sich gezeigt, dass der größte Teil der bei der Hochspannungserzeugung verbrauchten Leistung nicht vom Lichtdetektor 102, sondern vom Spannungswandler 105 und der damit zusammenhängenden Kaskadenschaltung (vgl. Fig. 3) als Leerlaufleistung verbraucht wird.

Um nun die Leerlaufleistung zu verringern, wird der Lichtdetektor 102 selber nicht abgeschaltet, sondern der Transformator des Spannungslers 105 mit einem extremen Tastverhältnis von kleiner 1 % angesteuert. Der Lichtdetektor 102 bleibt angeschaltet und bezieht in den Phasen, in denen kein Spannungssignal am Eingang des Transformators anliegt, seine Energie beispielsweise aus den Pufferkondensatoren.

Die Energie zum Aufladen der Kondensatoren ist im Wesentlichen so groß wie die vom Lichtdetektor 102 im vorherigen Zyklus entnommene Energie, insbesondere wenn der Spannungshub im Verhältnis zur Ladespannung gering ist.

Während der Ausschaltphase des Spannungslers 105 wird die Leerlaufleistung zu P = 0, während der Einschaltphase ist die Leerlaufleistung geringfügig höher als sie es im Dauerbetrieb (Tastverhältnis 50%) wäre. Die mittlere Leerlaufleistung der Hochspannungserzeugung ist in guter Näherung proportional zum Tastverhältnis. Deshalb kann durch eine Verkleinerung des Tastverhältnisses die Leerlaufleistung verringert werden. Die Verkleinerung des Tastverhältnisses hat allerdings zur Folge, daß sich die für die Energieübertragung zur Verfügung stehende Zeit verringert und sich die Momentanleistung entsprechend erhöht. Der Spannungswandler muß für diese Spitzenleistung ausgelegt sein. Dies ist jedoch in dieser Anwendung nicht kritisch, weil die durchschnittliche Versorgungsleistung für das lichtdetektierende Element 102 klein ist, beispielsweise einige 10µW.

Der Spannungswandler 105 kann mit einem Transformator 307 (vgl. Fig. 3) als Flusswandler ausgeführt sein. Zur Regelung der Ausgangsspannung HV kann der zeitliche Verlauf der Eingangsspannung für den Transformator auf verschiedene Arten gesteuert werden.

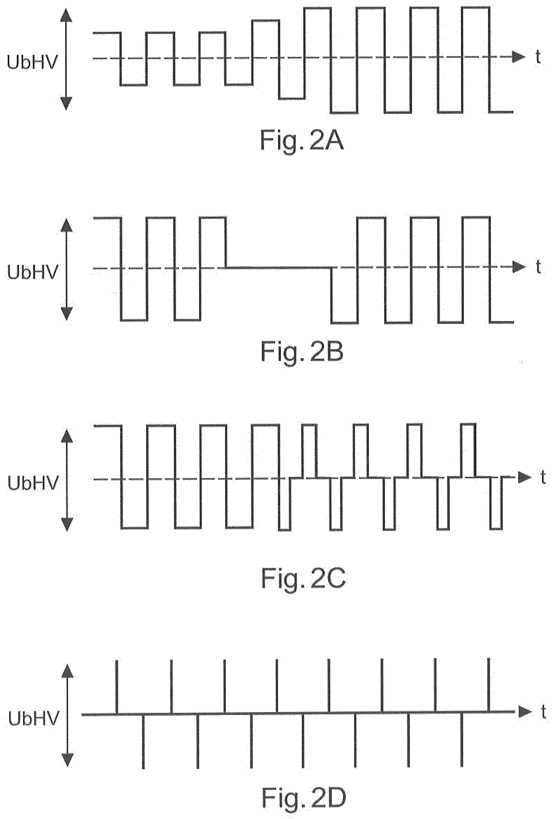

Der Transformator wird beispielsweise mit seiner Arbeitsfrequenz im Gegentakt mit einem Tastverhältnis von 50 % angesteuert (vgl. Fig. 2A). In dem in Fig. 2A gezeigten Fall ist die Amplitude der dem Transformator zugeführten Versorgungsspannung U_{bHV} veränderlich, jedoch ist die Periodendauer konstant und auch das Tastverhältnis ist konstant und liegt bei 50 %. U_{bHV} kann über die Leitung 112 vom Mikroprozessor 104 stufenlos gesteuert werden.

Im Fall der Fig. 2B ist die Amplitude der dem Transformator zugeführten Versorgungsspannung konstant. Weiterhin ist die Periodendauer konstant. Auch das Tastverhältnis ist konstant und liegt bei 50 %; jedoch wird die Spannung in Form eines veränderbaren pulsweitenmodulierten Signals (PWM) ein- und ausgeschaltet.

Im Fall der Fig. 2C sind die Amplitude der dem Transformator zugeführten Versorgungsspannung sowie die Periodendauer konstant, jedoch wird das Tastverhältnis variiert.

Fig. 2D zeigt im zeitlichen Verlauf die Versorgungsspannung, mit welcher der Transformator gemäß einem Ausführungsbeispiel der Erfindung angesteuert wird. Die Spannungsamplitude der einzelnen Pulse ist in ihrem Betrag konstant und liegt beispielsweise bei 12 V oder 2,7 V. Das Tastverhältnis ist sehr klein, beispielsweise kleiner als 1 %, beispielsweise 0,1 %. Es kann vorgesehen sein, daß die Periodendauer konstant gehalten wird und das Tastverhältnis variabel ist. Oder das Tastverhältnis wird konstant gehalten, und die Periodendauer ist veränderlich. Es können auch sowohl Periodendauer als auch Tastverhältnis veränderlich sein. Insbesondere kann vorgesehen sein, dass die Parameter vom Mikroprozessor verändert werden können, um den Betrieb des Messgeräts zu verbessern. Beispielsweise kann vorgesehen sein, dass die Parameter in Tests einmalig festgelegt werden. Sie gelten dann für alle gebauten Geräte und werden während des Betriebs auch nicht verändert.

Bei geeigneter Wahl des Übersetzungsverhältnisses am Transformator kann die Arbeitsfrequenz bis auf weniger 100 Hz und das Tastverhältnis auf 0,1 % verkleinert werden. Das Übersetzungsverhältnis leitet sich dann nicht, wie bei einem Flusswandler üblich, aus dem Verhältnis von Eingangs- zu Ausgangsspannung ab. Im Versuch wurden mit einem Übersetzungsverhältnis von 25:400 anstatt 40:200 gute Ergebnisse erzielt. Diese für einen Flusswandler unübliche Arbeitsweise hat für die Hochspannungserzeugung den großen Vorteil, dass die Leerlaufverlustleistung stark reduziert ist. Beispielsweise beträgt die Leerlaufverlustleistung nur 3 mW anstatt 15mW bei einer Ansteuerung gemäß Fig.2A.

Fig. 3 zeigt eine Schaltung für ein radiometrisches Messgerät gemäß einem Ausführungsbeispiel der Erfindung. Die Schaltung weist eine Spannungsversorgung 106 inklusive der kompletten Ansteuerung des Transformators, einen Spannungswandler 105 und einen von ihm zu versorgenden Lichtdetektor 102 auf. Der Spannungswandler umfasst den Transformator 307 und die Kaskadenschaltung. Weiterhin ist ein Lichtdetektor in Form eines Photomultipliers 102 gezeigt.

Die Anzahl der Teilspannungen und deren Höhe ist von der Art des verwendeten Lichtdetektors abhängig. Beispielhaft ist in Fig. 3 ein Spannungswandler gezeigt, der für einen Photomultiplier mit 11 Dynoden ausgelegt ist. Die Schaltung weist einen Flusswandler mit angeschlossener Ladungspumpe auf. Die Kathode des Photomultipliers 102 liegt auf Masse. Die Dynoden des Photomultipliers sind an den Punkten d1, ..., d11 angeschlossen. Die Anode des Photomultipliers liegt über einen Widerstand auf HV.

Durch geeignete Wahl der Kondensatoren kann die Welligkeit der Teilspannungen und der Innenwiderstand der Schaltung eingestellt werden. Eine Erhöhung der Kapazität der Kondensatoren kann zu einer verminderten Welligkeit der Teilspannungen führen.

Es kann auch vorgesehen sein, die Teilspannungen mittels Spannungsteiler aus einer Hochspannung zu erzeugen. Die Spannungswelligkeit wird dann minimal.

Der Transformator 307 weist zwei Primärwicklungen L1, L3 auf und eine Sekundärwicklung L2. Die Spannungsversorgung 106 ist zwischen den beiden Primärwicklungen L1 und L3 des Transformators angeschlossen und liefert beispielsweise eine Versorgungsspannung von 2,7 V, die über die Schalter 301, 302 gemäß Fig. 2D im Gegentakt moduliert ist. An den entgegengesetzten Enden der Primärwicklungen L1 und L3 ist jeweils ein Schalter 301, 302 vorgesehen, der vom Mikroprozessor mit einem PWM-Signal 112 angesteuert (geschaltet) wird.

Bezugszeichen 305 bezeichnet einen der Kondensatoren C2, C4, ..., C26, die Bestandteil der Ladungspumpe sind und zur Übertragung der Ladung auf die Pufferkondensatoren C1, C3, ..., C27 dienen. Bezugszeichen 306 bezeichnet einen dieser Pufferkondensatoren. Die Werte für die Kondensatoren können wie in Fig.3 22nF betragen, sie können aber auch kleiner oder größer sein, beispielsweise 10nF oder 100nF.

In Fig.3 ist eine Schaltung dargestellt, die für die Versorgung eines Photomultipliers 102 verwendet werden kann. Die Werte der Kondensatoren betragen jeweils 22 nF. Die Schaltung arbeitet aber auch mit Kondensatorwerten von beispielsweise 10 nF, 47 nF oder 100 nF. Es ergeben sich dann Unterschiede in der Welligkeit der Ausgangsspannungen und bei der Zeitkonstanten für die Regelung.

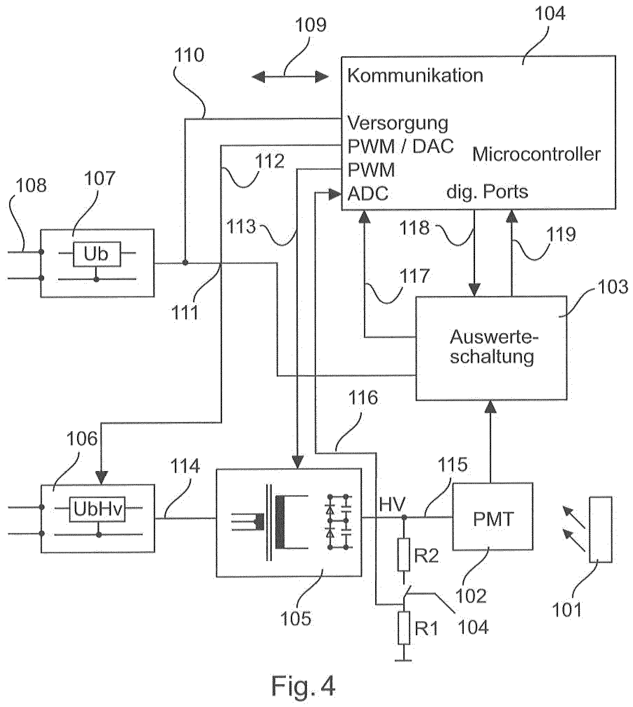

Für ein korrektes und reproduzierbares Arbeiten des Lichtdetektors unter sich ändernden Betriebsbedingungen muß dessen Versorgungsspannung regelbar sein. Zur Regelung der erzeugten Spannung muß diese auf einen geeigneten Regler geführt werden. Dabei kann es sich beispielsweise um eine rein analoge Schaltung mit Operationsverstärker handeln oder um eine softwaregesteuerte Lösung mit Mikroprozessor. Ist die zu regelnde Spannung, wie in diesem Fall, größer als die Arbeitsspannung des Reglers, wird sie üblicherweise über einen Spannungsteiler zum Regler geführt. Eine sinnvolle Dimensionierung dieses Spannungsteilers mit Normwerten ist beispielsweise R2=1 GigaOhm zu R1=2,21 MegaOhm (vgl. Fig.4). Bei einer zu regelnden Spannung von 1000 V beträgt der IST-Wert für den Regler dann 2,2 V. Die Verlustleistung am Spannungsteiler beträgt in diesem Beispiel rund 1mW. Diese ist höher als die Leistungsaufnahme des zu versorgenden Lichtdetektors. Die Leistungsaufnahme könnte verringert werden durch Erhöhen der Widerstände des Spannungsteilers, z.B. R2=10 GigaOhm zu R1=22,1 MegaOhm. Die Verlustleistung könnte damit zwar auf weniger als 100 µW verringert werden, dieser Wert liegt aber immer noch über der mittleren Betriebsleistung des Lichtdetektors. Außerdem können sich Einflüsse durch größeres Rauschen, Leckströme und Störsignale stärker negativ bemerkbar machen.

Weil sich die Hochspannung aufgrund der Wirkung der Pufferkondensatoren auch bei sich ändernder Belastung nur langsam ändert, ist eine kontinuierliche Regelung der Hochspannung nicht notwendig. Diese ändert sich beispielsweise bei einer wie oben beschriebenen Dimensionierung bezüglich Eingangsspannung, Tastverhältnis, Periodendauer und Leistungsaufnahme des Lichtdetektors um lediglich 300 mV in 100 ms. Der Einfluß dieser Änderung ist gegenüber äußeren Einflüssen auf das fertige Meßgerät vernachlässigbar. Es ist daher ausreichend, die Regelung beispielsweise nur alle 100 ms zu aktivieren und in der Zwischenzeit Eingangsspannung, Tastverhältnis und Periodendauer unverändert zu lassen. In dieser Zeit kann auch der Spannungsteiler R1/R2 über einen elektronischen Schalter von der Hochspannung getrennt werden. Bei Verwendung eines Mikroprozessors kann die Zeit zur Erfassung des IST-Wertes, der Berechnung neuer SOLL-Werte für Eingangsspannung, Tastverhältnis und Periodendauer weniger als 1ms betragen. Auf diese Weise kann die mittlere Verlustleistung durch den Spannungsteiler R2=1 GigaOhm zu R1=2,21 MegaOhm von 1 mW auf weniger als 10 µW verringert werden.

Fig. 4 zeigt ein Prinzipschaltbild des radiometrischen Messgeräts gemäß Fig. 1, jedoch mit einem Spanungsteiler R1/R2 und Schalter 104.

Fig. 5 zeigt ein Flussdiagramm eines Verfahrens, bei dem in Schritt 401 eine konstante Versorgungsspannung bereitgestellt wird. In Schritt 402 erfolgt ein Erzeugen eines pulsierenden Wechselspannungssignals aus der konstanten Versorgungsspannung mit einem Tastverhältnis von kleiner 1 % In Schritt 403 erfolgt dann ein Wandeln des pulsierenden Wechselspannungssignals in ein Hochspannungssignal, welches in Schritt 404 zum Versorgen der Detektoranordnung mit für deren Betrieb erforderlicher elektrischer Energie zum Umwandeln von radioaktiver Strahlung in ein elektrisches Signal verwendet wird.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Bezugszeichen in den Ansprüchen sind nicht als Einschränkungen anzusehen. Verbindungslinien zwischen einzelnen Schaltungsblöcken in den Figuren sind schematisch zu sehen. Sie können stellvertretend für ein- oder mehrpolige elektrische Verbindungen stehen.

## Patentansprüche

1. Radiometrisches Messgerät, aufweisend:
eine Detektoranordnung (101, 102) zum Umwandeln von radioaktiver Strahlung in ein elektrisches Signal;
eine Spanungsversorgung (106) mit einer Gegentaktsteuerungsschaltung (301, 302) zur Bereitstellung einer Versorgungsspannung;
einen Spannungswandler (105) mit einem Transformator (307);
**dadurch gekennzeichnet dass**:
die Gegentaktsteuerungsschaltung zur Erzeugung eines pulsierenden Wechselspannungssignals aus der Versorgungsspannung mit einem Tastverhältnis von kleiner 1 % ausgeführt ist, welches dem Transformator zugeführt wird, um daraus die Versorgungsspannung für die Detektoranordnung zu erzeugen;
wobei das Tastverhältnis das Verhältnis aus Pulsbreite und Periodendauer des Wechselspannungssignals ist.

2. Radiometrisches Messgerät nach Anspruch 1,
wobei die Gegentaktsteuerungsschaltung (301, 302) zur Erzeugung eines pulsierenden Wechselspannungssignals aus der Versorgungsspannung mit einem Tastverhältnis von kleiner 0,1 % ausgeführt ist.

3. Radiometrisches Messgerät nach einem der vorhergehenden Ansprüche,
wobei die Gegentaktsteuerungsschaltung (301, 302) zur Erzeugung eines pulsierenden Wechselspannungssignals aus der Versorgungsspannung eine Frequenz von 500 Hz oder weniger aufweist.

4. Radiometrisches Messgerät nach einem der vorhergehenden Ansprüche,
wobei der Transformator (307) ein Übersetzungsverhältnis von 1:16 oder kleiner aufweist.

5. Radiometrisches Messgerät nach einem der vorhergehenden Ansprüche,
wobei die Versorgungsspannung einen Wert von 4 V oder weniger aufweist.

6. Radiometrisches Messgerät nach einem der vorhergehenden Ansprüche,
wobei der Spannungswandler (105) einen oder mehrere Glättungskondensatoren (305) aufweist, die zur Glättung des Ausgangssignals des Transformators ausgeführt sind.

7. Radiometrisches Messgerät nach einem der vorhergehenden Ansprüche,
wobei der Spannungswandler (105) einen Pufferkondensator (306) aufweist, der zum Zwischenspeichern der vom Transformator (307) ausgegebenen Ladung ausgeführt ist, um einen kontinuierlichen Betrieb der Detektoranordnung (101, 102) zu ermöglichen.

8. Radiometrisches Messgerät nach einem der vorhergehenden Ansprüche,
wobei die Detektoranordnung einen Szintillator (101) und einen Photomultiplier (102) aufweist.

9. Radiometrisches Messgerät nach einem der Ansprüche 1 bis 7,
wobei die Detektoranordnung ein Geiger-Müller Zählrohr aufweist.

10. Radiometrisches Messgerät nach einem der vorhergehenden Ansprüche,
ausgeführt zum Anschluss an eine 4-20mA Zweileiterschleife (108), über welche das Messgerät mit der zu seinem Betrieb erforderlichen elektrischen Energie versorgt wird.

11. Radiometrisches Messgerät nach einem der vorhergehenden Ansprüche,
eine Regelungsschaltung (104, 112, 113) zum Regeln der Versorgungsspannung;
wobei das Messgerät ausgeführt ist, die Regelung nur zu bestimmten Zeiten zu aktivieren und nach erfolgter Regelung zu deaktivieren.

12. Radiometrisches Messgerät nach 11,
weiter aufweisend einen Spannungsteiler R1/R2, der bei deaktivierter Regelung der Versorgungsspannung von der Hochspannung getrennt wird.

13. Verfahren zum Messen eines Füllstands, eines Grenzstands, einer Dichte oder eines Durchsatzes mit einem radiometrischen Messgerät gemäß Anspruch 1, aufweisend die Schritte:
Bereitstellen einer konstanten Versorgungsspannung;
Erzeugen eines pulsierenden Wechselspannungssignals aus der konstanten Versorgungsspannung mit einem Tastverhältnis von kleiner 1 %, wobei das Tastverhältnis das Verhältnis aus Pulsbreite und Periodendauer des Wechselspannungssignals ist;
Wandeln des pulsierenden Wechselspannungssignals in ein Hochspannungssignal;
Zuführen des Hochspanungssignals an eine Detektoranordnung zum Versorgen der Detektoranordnung mit für deren Betrieb erforderlicher elektrischer Energie zum Umwandeln von radioaktiver Strahlung in ein elektrisches Signal.

## Claims

1. A radiometric measuring apparatus, comprising:
a detector arrangement (101, 102) for converting radioactive radiation into an electrical signal;
a voltage supply (106) comprising a push-pull control circuit (301, 302) for providing a supply voltage;
a voltage converter (105) having a transformer (307);
**characterized in that** said push-pull control circuit is configured to generate a pulsating AC voltage signal from the supply voltage with a duty cycle of less than 1% which is supplied to the transformer to generate therefrom the supply voltage for the detector arrangement;
wherein the duty cycle is the ratio of pulse width and period duration of the AC voltage signal.

2. The radiometric measuring apparatus according to claim 1,
wherein the push-pull control circuit (301, 302) is configured to generate a pulsating alternating voltage signal from the supply voltage with a duty cycle of less than 0.1%.

3. The radiometric measuring apparatus according to any one of the preceding claims,
wherein the push-pull control circuit (301, 302) comprises for generating a pulsating AC voltage signal from the supply voltage a frequency of 500 Hz or less.

4. The radiometric measuring apparatus according to any one of the preceding claims,
wherein the transformer (307) comprises a transmission ratio of 1:16 or less.

5. The radiometric measuring apparatus according to any one of the preceding claims,
wherein the supply voltage having a value of 4 V or less.

6. The radiometric measuring apparatus according to any one of the preceding claims,
wherein the voltage converter (105) comprises one or more smoothing capacitors (305) configured to smooth the output signal of the transformer.

7. The radiometric measuring apparatus according to any of the preceding claims,
the voltage converter (105) comprising a buffer capacitor (306) adapted to buffer the charge output from the transformer (307) to enable continuous operation of the detector array (101, 102).

8. The radiometric measuring apparatus according to any one of the preceding claims,
wherein the detector arrangement comprises a scintillator (101) and a photomultiplier (102).

9. The radiometric measuring apparatus according to any one of claims 1 to 7,
wherein the detector assembly comprises a Geiger-Müller counter tube.

10. The radiometric measuring apparatus according to any one of the preceding claims,
designed for connecting to a 4-20mA two-wire loop (108), which supplies the measuring apparatus with the electrical energy required for its operation.

11. The radiometric measuring apparatus according to any one of the preceding claims,
a control circuit (104, 112, 113) for controlling the supply voltage;
wherein the measuring apparatus is configured to activate the controlling only at certain times and to deactivate it after the controlling has taken place.

12. The radiometric measuring apparatus according to 11,
further comprising a voltage divider R1/R2, which is separated from the high voltage when the supply voltage control is deactivated.

13. A method for measuring a fill level, a limit level, a density or a flow rate with a radiometric measuring apparatus according to claim 1, comprising the steps of:
providing a constant supply voltage;
generating a pulsating AC voltage signal from the constant supply voltage at a duty cycle of less than 1%, wherein the duty cycle is the ratio of pulse width and period duration of the AC voltage signal;
converting the pulsating AC voltage signal into a high voltage signal;
supplying the high voltage signal to a detector arrangement for supplying the detector arrangement with electrical energy necessary for its operation to convert radioactive radiation into an electrical signal.

## Revendications

1. Appareil de mesure radiométrique comportant :
un ensemble de détection (101, 102) pour convertir un rayonnement radioactif en un signal électrique,
une alimentation en tension (106) avec un circuit de commande symétrique (301, 302) pour délivrer une tension d'alimentation,
un convertisseur de tension (105) avec un transformateur (307),
**caractérisé en ce que** :
le circuit de commande symétrique destiné à générer un signal de tension alternative pulsé à partir de la tension d'alimentation est réalisé avec un taux d'impulsions fourni au transformateur inférieur à 1 % afin de générer la tension d'alimentation pour l'ensemble de détection,
dans lequel le taux d'impulsions est le rapport entre la largeur d'impulsion et la période du signal de tension alternative.

2. Appareil de mesure radiométrique selon la revendication 1,
dans lequel le circuit de commande symétrique (301, 302) destiné à générer un signal de tension alternative pulsé à partir de la tension d'alimentation est réalisé avec un taux d'impulsions inférieur à 0,1 %.

3. Appareil de mesure radiométrique selon l'une des revendications précédentes,
dans lequel le circuit de commande symétrique (301, 302) destiné à générer un signal de tension alternative pulsé à partir de la tension d'alimentation a une fréquence inférieure ou égale à 500 Hz.

4. Appareil de mesure radiométrique selon l'une des revendications précédentes,
dans lequel le transformateur (307) a un rapport de transformation inférieur ou égal à 1:16.

5. Appareil de mesure radiométrique selon l'une des revendications précédentes, dans lequel la tension d'alimentation a une valeur inférieure ou égale à 4 V.

6. Appareil de mesure radiométrique selon l'une des revendications précédentes,
dans lequel le convertisseur de tension (105) comporte un ou plusieurs condensateurs de lissage (305) qui sont conçus pour lisser le signal de sortie du transformateur.

7. Appareil de mesure radiométrique selon l'une des revendications précédentes,
dans lequel le convertisseur de tension (105) comporte un condensateur tampon (306) qui est conçu pour le stockage intermédiaire de la charge délivrée par le transformateur (307) afin de permettre un fonctionnement continu de l'ensemble de détection (101, 102).

8. Appareil de mesure radiométrique selon l'une des revendications précédentes,
dans lequel l'ensemble de détection comporte un scintillateur (101) et un photomultiplicateur (102).

9. Appareil de mesure radiométrique selon l'une des revendications 1 à 7,
dans lequel l'ensemble de détection comporte un tube de comptage Geiger-Müller.

10. Appareil de mesure radiométrique selon l'une des revendications précédentes,
conçu pour être raccordé à une boucle à deux conducteurs de 4 à 20 mA (108) par l'intermédiaire de laquelle l'appareil de mesure est alimenté avec l'énergie électrique requise pour son fonctionnement.

11. Appareil de mesure radiométrique selon l'une des revendications précédentes,
comportant un circuit de régulation (104, 112, 113) pour réguler la tension d'alimentation,
dans lequel l'appareil de mesure est configuré pour activer la régulation uniquement à des instants déterminés et pour la désactiver après une régulation réussie.

12. Appareil de mesure radiométrique selon la revendication 11,
comportant en outre un diviseur de tension R1/R2 qui est séparé de la haute tension lorsque la régulation de la tension d'alimentation est désactivée.

13. Procédé pour mesurer un niveau de remplissage, un niveau limite, une densité ou un débit avec un appareil de mesure radiométrique selon la revendication 1, comportant les étapes consistant à :
délivrer une tension d'alimentation constante,
générer un signal de tension alternative pulsé à partir de la tension d'alimentation constante avec un taux d'impulsions inférieur à 1 %, le taux d'impulsions étant le rapport entre la largeur d'impulsion et la période du signal de tension alternative,
convertir le signal de tension alternative pulsé en un signal de haute tension,
transférer le signal de haute tension vers un ensemble de détection pour alimenter l'ensemble de détection avec de l'énergie électrique requise pour son fonctionnement pour la conversion d'un rayonnement radioactif en un signal électrique.
